# DEMANDE DE BREVET EUROPEEN

(11) **EP 2 149 345 A1**
(43) Date de publication de la demande: **03.02.2010**
(21) Numéro de dépôt: 09290675.9
(22) Date de dépôt: 28.07.2009
(51) Int. Cl.: A61C 1/08

(54) **Dispositif de positionnement d'un axe de référence en vue de la détermination d'un axe de perçage pour la mise en place d'au moins un implant dentaire**

(30) Priorité: 29.07.2008 FR 0804317
(71) Demandeur: Blouzard, François, 21000 Dijon (FR)
(72) Inventeur: Blouzard, François, 21000 Dijon (FR)

(57) **Abrégé**

Ce dispositif de positionnement comprend une gouttière (5) destinée à être adaptée sur au moins les dents adjacentes (6) à un édentement ou sur la muqueuse buccale en cas d'édentement total, au moins une réplique de dent (2) dont la forme est similaire de celle de la couronne d'une dent manquante destinée être remplacée par un implant dentaire, la réplique étant disposée dans la gouttière (5) de manière à être située à la place de la dent manquante lorsque la gouttière est adaptée sur le patient à traiter, la réplique comportant un logement (3) ménagé selon l'axe géométrique de la réplique de manière à coïncider avec l'axe géométrique de la dent manquante lorsque la gouttière est adaptée sur le patient à traiter, l'axe géométrique de la réplique constituant l'axe de référence, et au moins un premier plot radio-opaque (7) destiné à être monté selon l'axe du logement (3) ménagé dans la réplique (2).

## Description

La présente invention concerne un dispositif de positionnement d'un axe de référence en vue de la détermination d'un axe de perçage pour la mise en place d'au moins un implant dentaire et un procédé de détermination d'un axe de perçage pour la mise en place d'au moins un implant dentaire.

Ce type de dispositif est utilisé lorsque la denture d'un patient est fortement dégradée et nécessite le remplacement de dents manquantes par des prothèses dentaires. Ces prothèses dentaires sont solidarisées aux mâchoires du patient à l'aide d'implants dentaires cylindriques vissés ou impactés dans des logements ménagés dans l'os des maxillaires du patient.

La mise en place de ces implants dentaires se révèle délicate pour le chirurgien puisque ce dernier doit impérativement tenir compte de l'anatomie du patient pour ménager, dans les maxillaires, les logements destinés à recevoir les implants dentaires. En effet, le chirurgien doit orienter les outils de perçage des logements selon un axe très précis afin de ne pas léser des structures vasculaires, nerveuses ou des cavités anatomiques du patient et de réaliser le perçage dans un volume osseux d'épaisseur convenable.

Un premier type de dispositif de positionnement connu comporte une gouttière destinée à être adaptée sur au moins les dents adjacentes à un édentement ou sur la muqueuse buccale en cas d'édentement total, et au moins un insert de repérage cylindrique ou sphérique radio-opaque disposé par un prothésiste dans la gouttière selon l'axe géométrique supposé de la dent manquante.

Un second type de dispositif de positionnement connu comporte une gouttière destinée à être adaptée sur au moins les dents adjacentes à un édentement ou sur la muqueuse buccale en cas d'édentement total, et au moins une réplique de dent disposée dans la gouttière à la place de la dent manquante, la réplique de dent étant réalisée en résine incorporant un additif radio-opaque.

Afin de déterminer un axe de perçage pour positionner l'implant dentaire, il convient dans un premier temps d'obtenir des vues radiographiques de la mâchoire du patient équipé de la gouttière de l'un des premier et second types de dispositifs de positionnement connus, dans un deuxième temps de reconstituer à partir des vues radiographiques obtenues une image selon une coupe coronale oblique de la mâchoire montrant l'élément radio-opaque, à savoir l'insert de repérage ou la réplique de dent, dans un troisième temps de déterminer sur l'image reconstituée un axe idéal de perçage pour positionner l'implant dentaire, c'est-à-dire un axe correspondant à une région du maxillaire pouvant être forée sans léser les structures anatomiques à préserver, et dans un quatrième temps de déterminer l'orientation et la position relatives de l'axe idéal de perçage déterminé par rapport à l'axe géométrique de l'insert de repérage ou de la réplique de dent qui constitue un axe de référence.

Un inconvénient du premier type de dispositif de positionnement réside en ce que l'utilisation d'une réplique de dent radio-opaque noyée dans la résine d'une gouttière ne permet pas d'avoir un référentiel précis pour transférer les modifications d'axes entre l'axe géométrique de la réplique de dent et l'axe idéal de perçage déterminé mises en évidence lors de l'étude radiographique.

Un inconvénient du second type de dispositif de positionnement réside en ce que l'utilisation d'un insert cylindrique ou sphérique radio-opaque requiert du prothésiste devant réaliser le dispositif de détermination une succession d'étapes malaisées pour positionner l'insert selon l'axe géométrique de la dent manquante.

Afin de pallier ces inconvénients, il est connu d'utiliser des systèmes de modélisation numérique de la mâchoire du patient agencés pour reconstituer numériquement la mâchoire du patient, positionner des dents virtuelles à la place des dents manquantes, et déterminer les axes idéaux de perçage pour la mise en place des implants dentaires.

Bien que ces systèmes de modélisation numérique permettent d'obtenir des résultats de qualité améliorée, le prix et la complexité de ces systèmes en réserve l'utilisation uniquement aux pathologies les plus graves.

En outre, ces systèmes de modélisation numérique présentent l'inconvénient de nécessiter des acquisitions d'images radiographiques de la totalité de la mâchoire. De ce fait, ces systèmes de modélisation numérique nécessitent de réaliser un grand nombre de vues radiographiques constituant autant d'irradiations, ce qui est préjudiciable pour le patient.

La présente invention vise à remédier à ces inconvénients.

Le problème technique à la base de l'invention est donc la réalisation d'un dispositif de positionnement d'un axe de référence en vue de la détermination d'un axe de perçage pour la mise en place d'au moins un implant dentaire qui soit de structure simple et peu onéreuse, tout en permettant de positionner avec précision un axe de référence destiné à servir de référence afin d'apporter une correction d'orientation de l'axe idéal de perçage par rapport à l'axe de référence lorsque l'axe idéal de perçage est décalé par rapport à l'axe de référence.

A cet effet, la présente invention concerne un dispositif de positionnement d'un axe de référence en vue de la détermination d'un axe de perçage pour la mise en place d'au moins un implant dentaire, caractérisé en ce qu'il comprend :
- une gouttière destinée à être adaptée sur au moins les dents adjacentes à un édentement ou sur la muqueuse buccale en cas d'édentement total,
- au moins une réplique de dent dont la forme est similaire de celle de la couronne d'une dent manquante destinée être remplacée par un implant dentaire, la réplique étant montée dans la gouttière de manière à être située à la place de la dent manquante lorsque la gouttière est adaptée sur le patient à traiter, la réplique comportant un logement ménagé selon l'axe géométrique de la réplique de manière à coïncider avec l'axe géométrique de la dent manquante lorsque la gouttière est adaptée sur le patient à traiter, l'axe géométrique de la réplique constituant l'axe de référence,
- au moins un premier plot radio-opaque destiné à être monté selon l'axe du logement ménagé dans la réplique.

Il doit être noté que l'axe idéal de perçage peut être confondu avec l'axe de référence lorsque l'axe de référence correspond à une région du maxillaire pouvant être forée sans léser les structures anatomiques à préserver, et peut être décalé par rapport à l'axe de référence lorsque ce dernier correspond à une région du maxillaire ne pouvant pas être forée sans léser les structures anatomiques à préserver

L'utilisation d'une réplique de dent présentant une forme similaire de celle de la couronne de la dent manquante destinée être remplacée par un implant dentaire et le fait que le logement est ménagé selon l'axe géométrique de la réplique permettent un positionnement aisé et précis du logement selon l'axe géométrique de la dent manquante.

De ce fait, lorsque le premier plot radio-opaque est monté selon l'axe du logement ménagé dans la réplique, ce premier plot radio-opaque s'étend nécessairement selon l'axe géométrique de la dent manquante.

Il en résulte donc l'obtention d'un référentiel précis pour transférer d'éventuelles modifications d'axes entre l'axe géométrique de la réplique de dent, qui constitue l'axe de référence, et l'axe idéal de perçage mis en évidence lors de l'étude radiographique.

En outre le fait que la réplique soit distincte de la gouttière permet de réaliser la réplique et la gouttière à partir de différents matériaux.

Avantageusement, la réplique comporte un évidement débouchant d'une part dans la face de la réplique destinée à être tournée vers la langue du patient, dite face linguale, ou dans la face de la réplique destinée à être tournée vers la joue du patient, dite face vestibulaire, et d'autre part dans le logement ménagé dans la réplique, l'évidement s'étendant sur au moins une partie de la hauteur de la réplique, et de préférence sur la totalité de la hauteur de la réplique.

De préférence, le dispositif comprend :
- un insert de repérage comportant des première et seconde portions reliées l'une à l'autre, la première portion étant agencée pour être insérée dans le logement ménagé dans la réplique, la première portion comportant un premier logement dont l'axe est orienté de manière à coïncider avec l'axe du logement ménagé dans la réplique lorsque la première portion est insérée dans le logement ménagé dans la réplique, la seconde portion comportant un second logement dont l'axe est parallèle à l'axe du premier logement, et
- un second plot radio-opaque destiné à être monté dans le second logement ménagé dans la seconde portion de l'insert de repérage,
et le premier plot radio-opaque est destiné à être dans le premier logement ménagé dans la première portion de l'insert de repérage.

La combinaison des premier et second plots radio-opaques permet de réaliser les opérations suivantes :
- le premier plot radio-opaque monté dans la première portion de l'insert de repérage est visible sur les images de la mâchoire reconstituées à partir des vues radiographiques obtenues et matérialise ainsi l'axe de référence,
- la présence du second plot radio-opaque monté dans la seconde portion de l'insert de repérage permet la matérialisation d'un plan vestibulo-lingual passant par l'axe géométrique de la réplique de dent.

Cette matérialisation d'un tel plan vestibulo-lingual permet au radiologue de faire coïncider la coupe coronale oblique reconstruite numériquement avec le plan passant par les deux plots radio-opaques. En procédant ainsi, le report des mesures effectués sur la coupe radiographique est optimisé par une projection orthogonale du plan de référence déterminé par les axes des deux plots radio-opaques sur le plan de coupe radiographique.

De préférence, le premier plot radio-opaque et le second plot radio-opaque sont destinés à être montés de manière amovible respectivement dans le premier logement et le second logement ménagés dans l'insert de repérage.

Selon un mode de réalisation du dispositif, le premier plot radio-opaque est monté de manière amovible dans le logement ménagé dans la réplique.

Selon un mode de réalisation du dispositif, la réplique n'est pas montée directement dans la gouttière, mais elle est montée dans cette dernière par l'intermédiaire de l'insert de repérage qui est maintenu par sa première extrémité dans la réplique et qui est maintenu par sa deuxième portion dans le fourreau qui est lui inclus dans la gouttière.

La présente invention concerne également un procédé de détermination d'un axe de perçage pour la mise en place d'au moins un implant dentaire, caractérisé en ce qu'il comporte les étapes consistant à :
- prévoir au moins une réplique de dent dont la forme est similaire de celle de la couronne d'une dent manquante destinée être remplacée par un implant dentaire, la réplique comportant un logement ménagé selon l'axe géométrique de la réplique,
- réaliser une gouttière apte à être adaptée sur au moins les dents adjacentes à un édentement ou sur la muqueuse buccale en cas d'édentement total,
- monter la réplique dans la gouttière de telle sorte que la réplique soit située à la place de la dent manquante et que l'axe du logement ménagé dans la réplique coïncide avec l'axe géométrique de la dent manquante lorsque la gouttière est adaptée sur le patient à traiter,
- disposer un premier plot radio-opaque selon l'axe du logement ménagé dans la réplique,
- adapter la gouttière sur la mâchoire du patient,
- obtenir des vues de type radiographique de la mâchoire du patient équipé de la gouttière,
- déterminer à partir des vues radiographiques obtenues un axe de perçage pour positionner l'implant dentaire.

Avantageusement, le premier plot radio-opaque est monté de manière amovible dans le logement ménagé dans la réplique.

De préférence, le procédé comprend plusieurs étapes réalisées avant l'étape d'adaptation de la gouttière sur la mâchoire du patient et consistant à :
- prévoir un insert de repérage comportant des première et seconde portions reliées l'une à l'autre, la première portion étant agencée pour être insérée dans le logement ménagé dans la réplique, la première portion comportant un premier logement dont l'axe est orienté de manière à coïncider avec l'axe du logement ménagé dans la réplique lorsque la première portion est insérée dans le logement ménagé dans la réplique, la seconde portion comportant un second logement dont l'axe est parallèle à l'axe du premier logement,
- insérer la première portion de l'insert de repérage dans le logement ménagé dans la réplique,
- monter le premier plot radio-opaque dans le premier logement ménagé dans la première portion de l'insert de repérage,
- monter un second plot radio-opaque dans le second logement ménagé dans la seconde portion de l'insert de repérage.

De préférence, le premier plot radio-opaque et le second plot radio-opaque sont montés de manière amovible respectivement dans le premier logement et le second logement ménagés dans l'insert de repérage.

Avantageusement, la réplique comporte un évidement débouchant d'une part dans la face de la réplique destinée à être tournée vers la langue du patient, dite face linguale, ou dans la face de la réplique destinée à être tournée vers la joue du patient, dite face vestibulaire, et d'autre part dans le logement ménagé dans la réplique, l'évidement s'étendant sur au moins une partie de la hauteur de la réplique, et de préférence sur la totalité de la hauteur de la réplique.

De préférence, l'évidement s'étend selon le plan vestibulo-lingual de la réplique, c'est-à-dire selon un plan contenant l'axe du logement ménagé dans la réplique et s'étendant sensiblement perpendiculaire à la direction d'alignement des dents adjacentes à l'édentement.

Selon un mode de mise en oeuvre du procédé, l'étape consistant à déterminer un axe de perçage pour positionner l'implant dentaire à partir des vues radiographiques obtenues comprend plusieurs étapes consistant à :
- reconstituer à partir des vues radiographiques obtenues une image de la mâchoire montrant au moins le premier plot radio-opaque,
- déterminer et matérialiser sur l'image reconstituée l'axe de perçage pour positionner l'implant dentaire,
- déterminer l'orientation et la position relatives de l'axe de perçage déterminé par rapport à l'axe géométrique de la réplique.

Selon un autre mode de mise en oeuvre du procédé, l'étape consistant à déterminer un axe de perçage pour positionner l'implant dentaire à partir des vues radiographiques obtenues comprend plusieurs étapes consistant à :
- reconstituer à partir des vues radiographiques obtenues une image de la mâchoire montrant les premier et second plots radio-opaques,
- déterminer et matérialiser sur l'image reconstituée l'axe de perçage pour positionner l'implant dentaire,
- déterminer l'orientation et la position relatives de l'axe de perçage déterminé par rapport à l'axe géométrique du second plot radio-opaque.

De préférence, l'étape de reconstitution de l'image de la mâchoire montrant les premier et second plots radio-opaques comprend plusieurs étapes consistant à :
- reconstituer numériquement à partir des vues radiographiques obtenues une première image de la mâchoire du patient selon une coupe perpendiculaire à un axe passant par le sommet du crâne et la plante des pieds du patient, la première image montrant les premier et second plots radio-opaques,
- reconstituer numériquement à partir de la première image une seconde image de la mâchoire du patient selon une coupe coronale oblique passant par le plan délimité par les premier et second plots radio-opaques.

Avantageusement, la réplique est montée dans la gouttière lors de l'étape de réalisation de cette dernière.

De toute façon l'invention sera bien comprise à l'aide de la description qui suit en référence au dessin schématique annexé représentant, à titre d'exemple non limitatif, une forme d'exécution de ce dispositif de détermination.
Figure 1 est une vue perspective d'une réplique de dent selon l'invention,
Figure 2 est une perspective d'une gouttière adaptée sur la mâchoire d'un patient présentant une édentation partielle.
Figure 3 est une perspective de la gouttière de figure 2 avec deux plots radio-opaques disposés dans les logements de deux répliques de dent.
Figure 4 est une vue schématique d'une coupe coronale oblique issue de l'examen au scanner à rayon X de la mâchoire d'un patient équipé de la gouttière de figure 3.
Figure 5 est une vue perspective d'un insert de repérage selon l'invention.
Figure 6 est une schématique d'une gouttière équipée de plusieurs inserts de repérage de figure 2.
Figure 7 est une vue schématique d'une coupe issue de l'examen au scanner à rayon X de la mâchoire d'un patient équipé de la gouttière de figure 6, la coupe étant réalisée selon un plan perpendiculaire à un axe passant par le sommet du crâne et la plante des pieds du patient.
Figure 8 est une vue perspective d'un insert de repérage de figure 5 inséré dans le logement et l'évidement ménagé dans la réplique de figure 1, et d'un fourreau inséré autour de la seconde portion de l'insert de repérage.
Figure 9 est une vue schématique en perspective d'un guide de perçage.
Figure 10 est une vue schématique d'une gouttière équipée d'un fourreau de figure 8 dans lequel est inseré le guide de perçage de figure 9.

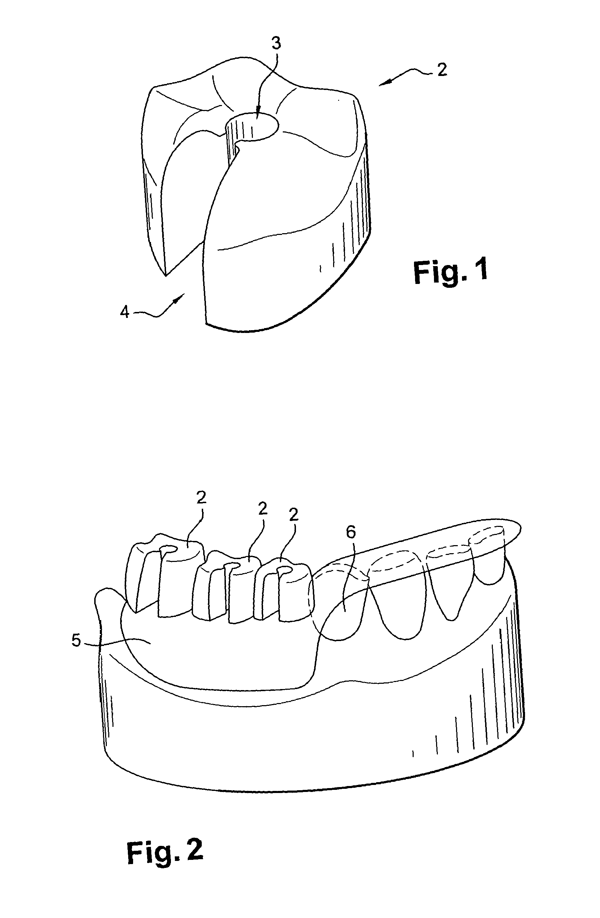

Un procédé de détermination d'un axe de perçage pour la mise en place d'au moins un implant dentaire selon l'invention comporte une première étape qui consiste à prévoir au moins une réplique de dent 2 (montrée plus particulièrement sur la figure 1) dont la forme est similaire de celle de la couronne d'une dent manquante destinée être remplacée par un implant dentaire. La réplique 2 est de préférence réalisée en matière synthétique.

La réplique 2 comporte un logement traversant 3 ménagé selon l'axe géométrique de la réplique. Le logement 3 ménagé dans la réplique présente de préférence une section sensiblement circulaire.

La réplique 2 comporte en outre un évidement 4 débouchant d'une part dans la face de la réplique destinée à être tournée vers la joue du patient, dite face vestibulaire, et d'autre part dans le logement 3 ménagé dans la réplique, l'évidement 4 s'étendant sur la totalité de la hauteur de la réplique.

Il doit être noté que l'évidement 4 s'étend selon le plan vestibulo-lingual de la réplique, c'est-à-dire selon un plan contenant l'axe du logement 3 ménagé dans la réplique et s'étendant sensiblement perpendiculaire à la direction d'alignement des dents adjacentes à l'édentement.

Le procédé comporte une seconde étape qui consiste à réaliser une gouttière 5 (montrée plus particulièrement à la figure 2) destinée à être adaptée sur les dents adjacentes 6 à un édentement et/ou sur la muqueuse buccale. La gouttière 5 est réalisée sur un modèle en plâtre issu d'une empreinte des maxillaires du patient. La gouttière 5 peut être réalisée par exemple en résine auto-durcissante ou par thermoformage.

La gouttière 5 est réalisée de telle sorte que la réplique 2 est au moins en partie incluse dans la gouttière et disposée dans cette dernière de manière à être située à la place de la dent manquante lorsque la gouttière est adaptée sur le patient à traiter. De plus, la réplique 2 est disposée dans la gouttière de manière à ce que l'axe du logement 3 ménagé dans la réplique coïncide avec l'axe géométrique de la dent manquante lorsque la gouttière est adaptée sur le patient à traiter.

Le procédé comporte une troisième étape qui consiste à disposer un premier plot en matériau radio-opaque 7 selon l'axe du logement 3 ménagé dans la réplique 2.

Le procédé comporte une quatrième étape qui consiste à :
- adapter la gouttière 5 sur la mâchoire du patient,
- obtenir des vues de type radiographique de la mâchoire du patient équipé de la gouttière 5,
- déterminer à partir des vues radiographiques obtenues un axe de perçage pour positionner l'implant dentaire.

Il est à signaler que l'obtention des vues de type radiographique peut être obtenue en réalisant un examen de type radiographique de la mâchoire du patient équipé de la gouttière, tel qu'un examen au scanner à rayon X.

Il est également à signaler que les vues radiographiques peuvent être constitués par des coupes scanner reconstruites numériquement s'étendant chacune selon un plan perpendiculaire à un axe passant par le sommet du crâne et la plante des pieds du patient et montrant le premier plot radio-opaque 7.

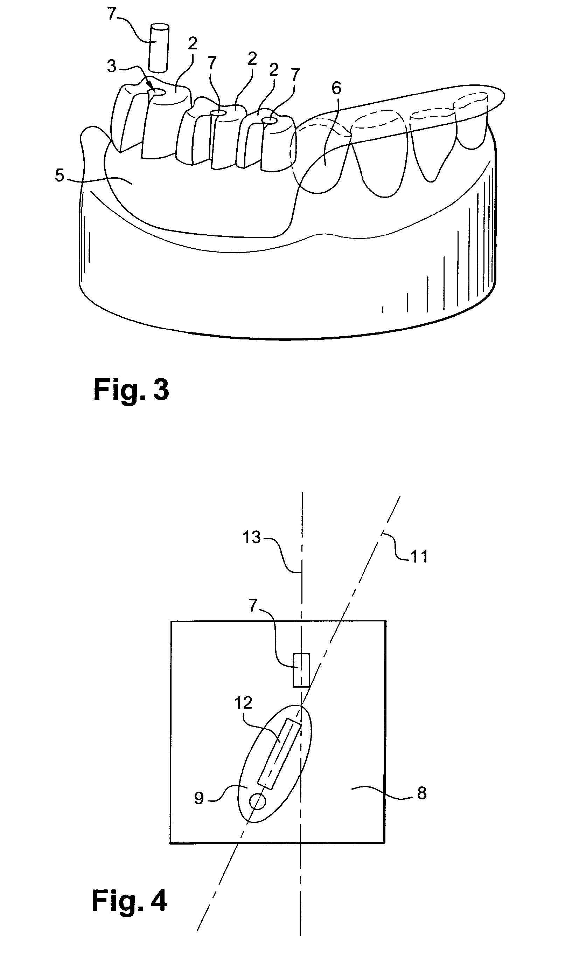

Il est à noter que l'étape consistant à déterminer un axe de perçage pour positionner l'implant dentaire à partir des vues radiographiques obtenues comprend plusieurs étapes consistant à :
- reconstituer numériquement à partir des vues radiographiques obtenues une image 8 (montrée à la figure 4) selon une coupe coronale oblique de la mâchoire 9 montrant le premier plot radio-opaque 7,
- déterminer et matérialiser sur l'image reconstituée un axe de perçage 11 pour positionner l'implant dentaire 12,
- déterminer l'orientation et la position relatives de l'axe de perçage déterminé 11 par rapport à l'axe géométrique 13 de la réplique de dent.

Selon une variante du procédé de détermination, l'étape consistant à disposer le premier plot radio-opaque 7 selon l'axe du logement 3 ménagé dans la réplique 2 comporte une étape consistant à monter le premier plot radio-opaque 7 de manière amovible dans le logement 3 ménagé dans la réplique.

Selon cette variante du procédé, le premier plot radio-opaque 7 présente un diamètre extérieur correspondant au diamètre intérieur du logement ménagé dans la réplique. Comme montré sur la figure 3, le premier plot radio-opaque est de section circulaire et est maintenu par friction dans le logement ménagé dans la réplique.

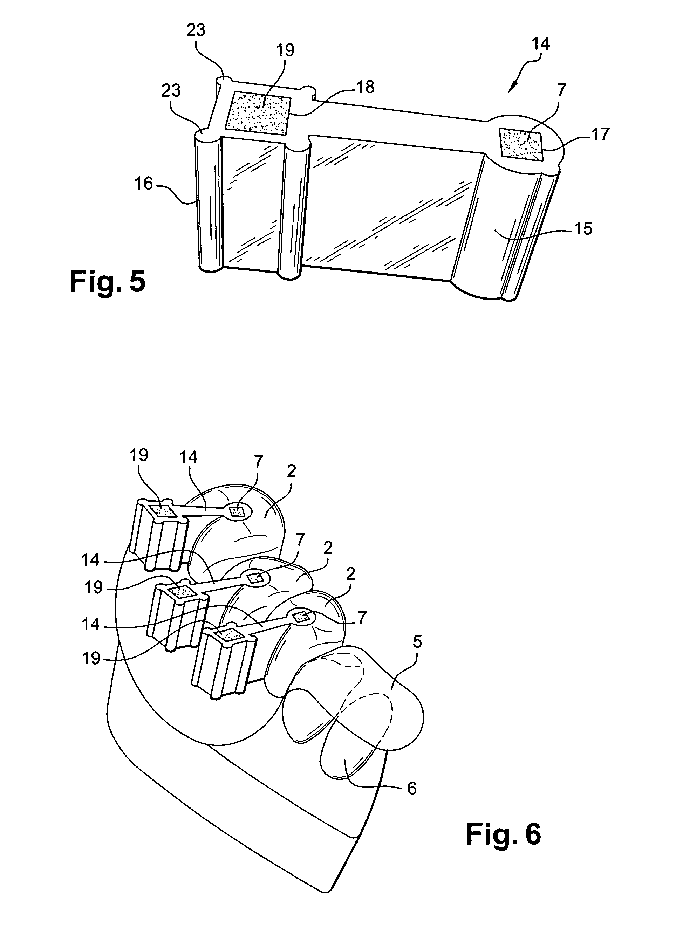

Selon une autre variante du procédé de détermination, le procédé comprend plusieurs étapes réalisées avant l'étape d'adaptation de la gouttière 5 sur la mâchoire du patient et consistant à :
- prévoir un insert de repérage 14 (montré sur la figure 5) comportant des première et seconde portions 15, 16 reliées l'une à l'autre, la première portion 15 étant agencée pour être insérée dans le logement 3 et l'évidement 4 ménagés dans la réplique 2, la première portion 15 comportant un premier logement traversant 17 dont l'axe est orienté de manière à coïncider avec l'axe du logement 3 ménagé dans la réplique 2 lorsque la première portion 15 est insérée dans ce dernier, la seconde portion 16 comportant un second logement traversant 18 dont l'axe est parallèle à l'axe du premier logement,
- insérer la première portion 15 de l'insert de repérage 14 dans le logement 3 et l'évidement 4 ménagés dans la réplique 2,
- monter de manière amovible le premier plot radio-opaque 7 dans le premier logement 17 ménagé dans la première portion 15 de l'insert de repérage 14,
- monter de manière amovible un second plot radio-opaque 19 dans le second logement 18 ménagé dans la seconde portion 16 de l'insert de repérage 14.

De préférence, les étapes consistant à prévoir l'insert de repérage 14 et à insérer la première portion 15 de l'insert de repérage dans le logement 3 et l'évidement 4 ménagés dans la réplique 2 sont réalisées avant l'étape de réalisation de la gouttière 5.

Selon un mode de mise en oeuvre du procédé, les premier et second plots radio-opaques 7, 19 sont prémontés respectivement dans les premier et second logements ménagés dans l'insert de repérage 14 avant l'insertion de la première portion 15 de l'insert de repérage 14 dans le logement 3 et l'évidement 4 ménagés dans la réplique 2.

Il doit être noté que, selon cette variante du procédé, la première portion 15 de l'insert de repérage 14 est maintenue par friction dans le logement et l'évidement ménagés dans la réplique. La première portion 15 présente donc un profil extérieur complémentaire du profil intérieur du logement 3 et de l'évidement 4 ménagés dans la réplique 2.

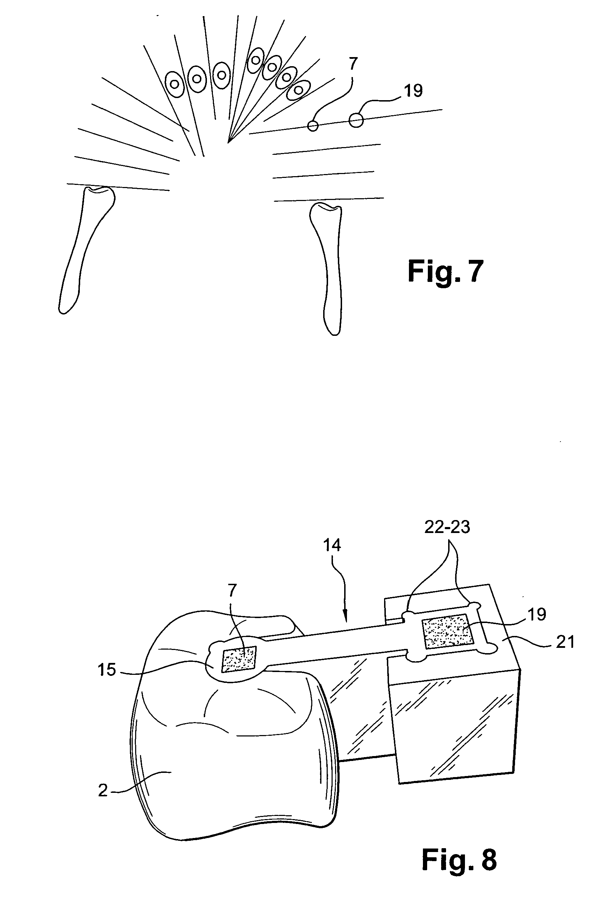

La reconstruction radiographique est réalisée dans un premier temps en obtenant, à partir de l'examen au scanner à rayon X, une image de la mâchoire d'un patient équipé de la gouttière 5 comprenant l'insert de repérage 14 selon un plan perpendiculaire à un axe passant par le sommet du crâne et la plante des pieds du patient et montrant les premier et second plots radio-opaques 7, 19 (comme montré sur la figure 7), et dans un second temps en réglant la plan de coupe coronale oblique de manière à ce qu'il passe par les deux plots radio-opaques 7, 19.

Il doit également être noté que les premier et second plots radio-opaques 7, 19 sont respectivement maintenus par friction dans les premier et second logements 17, 18 ménagés dans les première et seconde portions 15, 16 de l'insert de repérage 14.

En outre, selon cette variante du procédé, les premier et second plots radio-opaques 7, 19 sont de section carrée.

Il doit être précisé que la structure de l'évidement 4 ménagé dans la réplique 2, le positionnement des premier et second plots radio-opaques 7, 19 et le fait que l'insert de repérage 14 est inséré dans le logement et l'évidement ménagés dans la réplique 2 permettent au radiologue de s'assurer que la reconstruction radiographique est réalisée selon le plan vestibulo-lingual de la réplique 2, donc de la dent manquante.

Afin de pouvoir réaliser un perçage destiné à recevoir un implant dentaire devant remplacer une dent manquante, il est possible, après détermination de l'axe idéal de perçage, d'adapter un fourreau 21 (comme montré à la figure 8) autour de la seconde portion 16 de l'insert de repérage 14. Le fourreau 21 est de préférence réalisé en matière synthétique. Le fourreau 21 comporte un logement axial et un évidement débouchant d'une part dans la surface externe du fourreau 21, et d'autre part dans le logement axial, l'évidement s'étendant sur la totalité de la hauteur du fourreau.

Le fourreau 21 comporte des rainures longitudinales 22 agencées pour coopérer avec des nervures longitudinales 23 ménagées sur la seconde portion 16 de l'insert de repérage 14 de telle sorte que le fourreau soit retenu par friction autour la seconde portion 16.

Il doit être noté que l'axe géométrique du fourreau 21 est coaxial à celui du second plot radio-opaque 19 lorsque le fourreau est adapté autour de la seconde portion 16 de l'insert de repérage 14.

Après avoir adapter le fourreau 21 autour de la seconde portion 16 de l'insert de repérage 14, le fourreau est inclus dans la matière constituant la gouttière 5.

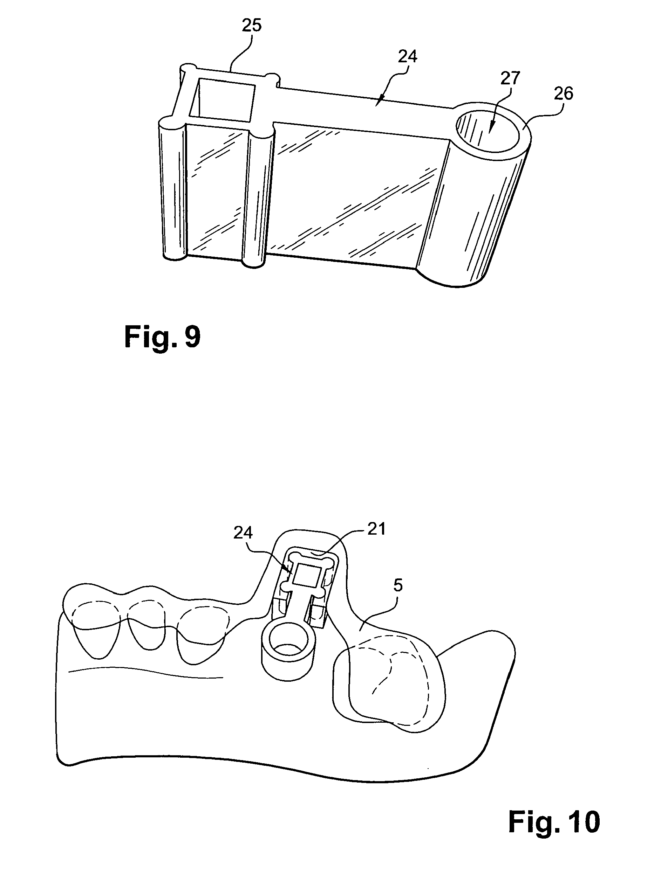

Ensuite, l'insert de repérage 14 et la réplique de dent 2 sont retirés hors de la gouttière 5 et un guide de perçage 24 (comme montré à la figure 9) est adapté dans le logement axial et l'évidement ménagés dans le fourreau 21 (comme montré à la figure 10).

Le guide de perçage 24 comporte des première et seconde portions 25, 26 reliées l'une à l'autre, la première portion 25 présentant un profil externe complémentaire du profil interne du fourreau 21 de manière à pourvoir être insérée et maintenue par friction dans le fourreau, la seconde portion 26 délimitant un canon de perçage 27 dont le diamètre correspond à celui de l'outil de perçage utilisé par le chirurgien pour ménager dans le maxillaire le logement osseux destiné à recevoir l'implant dentaire. Selon une variante de réalisation du guide de perçage, le canon de perçage 26 pourrait être remplacé par une gorge de guidage de l'outil de perçage.

Avantageusement, le guide de perçage 24 est réalisé sur mesure de telle sorte que l'axe du canon de perçage ou de la gorge de guidage coïncide avec l'axe idéal de perçage déterminé radiographiquement lorsque le guide de perçage est adapté dans le fourreau 21.

Dans ce cas, le chirurgien doit uniquement se préoccuper de l'orientation de l'outil de perçage selon l'axe idéal de perçage déterminé, ce qui limite les risques d'erreurs d'orientation de l'outil de perçage.

En outre, étant donné que le fourreau et le guide de perçage s'étendent dans le même plan que le référentiel de détermination de l'axe de perçage, le volume d'acquisition radiographique peut être réduit au volume adjacent au plan de coupe nécessaire à l'étude du cas, ce qui limite considérablement l'irradiation du patient et permet l'utilisation d'appareils radiographiques de dernières générations à volume d'acquisition réduit.

Comme il va de soi l'invention ne se limite pas à la forme d'exécution de ce dispositif de détermination décrite ci-dessus à titre d'exemple, elle embrasse au contraire toutes les variantes de réalisation.

## Revendications

1. Dispositif de positionnement d'un axe de référence en vue de la détermination d'un axe de perçage pour la mise en place d'au moins un implant dentaire, **caractérisé en ce qu'**il comprend :
- une gouttière (5) destinée à être adaptée sur au moins les dents adjacentes (6) à un édentement ou sur la muqueuse buccale en cas d'édentement total,
- au moins une réplique de dent (2) dont la forme est similaire de celle de la couronne d'une dent manquante destinée être remplacée par un implant dentaire, la réplique étant montée dans la gouttière (5) de manière à être située à la place de la dent manquante lorsque la gouttière est adaptée sur le patient à traiter, la réplique comportant un logement (3) ménagé selon l'axe géométrique (13) de la réplique de manière à coïncider avec l'axe géométrique de la dent manquante lorsque la gouttière est adaptée sur le patient à traiter, l'axe géométrique (13) de la réplique constituant l'axe de référence,
- au moins un premier plot radio-opaque (7) destiné à être monté selon l'axe du logement (3) ménagé dans la réplique (2).

2. Dispositif selon la revendication 1, **caractérisé en ce que** la réplique (2) comporte un évidement (4) débouchant d'une part dans la face de la réplique destinée à être tournée vers la langue du patient, dite face linguale, ou dans la face de la réplique destinée à être tournée vers la joue du patient, dite face vestibulaire, et d'autre part dans le logement (3) ménagé dans la réplique, l'évidement (4) s'étendant sur au moins une partie de la hauteur de la réplique, et de préférence sur la totalité de la hauteur de la réplique.

3. Dispositif selon la revendication 1 ou 2, **caractérisé en ce qu'**il comprend :
- un insert de repérage (14) comportant des première et seconde portions (15, 16) reliées l'une à l'autre, la première portion (15) étant agencée pour être insérée dans le logement (3) ménagé dans la réplique, la première portion (15) comportant un premier logement (17) dont l'axe est orienté de manière à coïncider avec l'axe du logement (3) ménagé dans la réplique lorsque la première portion (15) est insérée dans le logement ménagé dans la réplique, la seconde portion (16) comportant un second logement (18) dont l'axe est parallèle à l'axe du premier logement (17), et
- un second plot radio-opaque (19) destiné à être monté dans le second logement (18) ménagé dans la seconde portion (16) de l'insert de repérage (14),
et **en ce que** le premier plot radio-opaque (7) est destiné à être monté dans le premier logement (17) ménagé dans la première portion (15) de l'insert de repérage (14).

4. Dispositif selon l'une des revendications 1 et 2, **caractérisé en ce que** le premier plot radio-opaque (7) est monté de manière amovible dans le logement (3) ménagé dans la réplique (2).

5. Procédé de détermination d'un axe de perçage pour la mise en place d'au moins un implant dentaire, **caractérisé en ce qu'**il comporte les étapes consistant à :
- prévoir au moins une réplique de dent (2) dont la forme est similaire de celle de la couronne d'une dent manquante destinée être remplacée par un implant dentaire, la réplique comportant un logement (3) ménagé selon l'axe géométrique de la réplique,
- réaliser une gouttière (5) apte à être adaptée sur au moins les dents adjacentes à un édentement ou sur la muqueuse buccale en cas d'édentement total,
- monter la réplique (2) dans la gouttière (5) de telle sorte que la réplique soit située à la place de la dent manquante et que l'axe du logement (3) ménagé dans la réplique coïncide avec l'axe géométrique de la dent manquante lorsque la gouttière (5) est adaptée sur le patient à traiter,
- disposer un premier plot radio-opaque (7) selon l'axe du logement (3) ménagé dans la réplique,
- adapter la gouttière (5) sur la mâchoire du patient,
- obtenir des vues de type radiographique de la mâchoire du patient équipé de la gouttière,
- déterminer à partir des vues radiographiques obtenues un axe de perçage pour positionner l'implant dentaire.

6. Procédé selon la revendication 5, **caractérisé en ce que** le premier plot radio-opaque (7) est monté de manière amovible dans le logement (3) ménagé dans la réplique.

7. Procédé selon la revendication 5, **caractérisé en ce qu'**il comprend plusieurs étapes réalisées avant l'étape d'adaptation de la gouttière sur la mâchoire du patient et consistant à :
- prévoir un insert de repérage (14) comportant des première et seconde portions (15, 16) reliées l'une à l'autre, la première portion (15) étant agencée pour être insérée dans le logement (3) ménagé dans la réplique (2), la première portion (15) comportant un premier logement (17) dont l'axe est orienté de manière à coïncider avec l'axe du logement (3) ménagé dans la réplique lorsque la première portion (15) est insérée dans le logement ménagé dans la réplique, la seconde portion (16) comportant un second logement (18) dont l'axe est parallèle à l'axe du premier logement (17),
- insérer la première portion (15) de l'insert de repérage (14) dans logement (3) ménagé dans la réplique,
- monter le premier plot radio-opaque (7) dans le premier logement (17) ménagé dans la première portion de l'insert de repérage (14),
- monter un second plot radio-opaque (19) dans le second logement (18) ménagé dans la seconde portion (16) de l'insert de repérage.

8. Procédé selon l'une des revendications 5 à 7, **caractérisé en ce que** l'étape consistant à déterminer un axe de perçage pour positionner l'implant dentaire à partir des vues radiographiques obtenues comprend plusieurs étapes consistant à :
- reconstituer à partir des vues radiographiques obtenues une image (8) de la mâchoire (9) montrant au moins le premier plot radio-opaque (7),
- déterminer et matérialiser sur l'image reconstituée l'axe de perçage (11) pour positionner l'implant dentaire (12),
- déterminer l'orientation et la position relatives de l'axe de perçage déterminé par rapport à l'axe géométrique (13) de la réplique.

9. Procédé selon la revendication 7, **caractérisé en ce que** l'étape consistant à déterminer un axe de perçage pour positionner l'implant dentaire à partir des vues radiographiques obtenues comprend plusieurs étapes consistant à :
- reconstituer à partir des vues radiographiques obtenues une image de la mâchoire montrant les premier et second plots radio-opaques (7, 19),
- déterminer et matérialiser sur l'image reconstituée l'axe de perçage pour positionner l'implant dentaire,
- déterminer l'orientation et la position relatives de l'axe de perçage déterminé par rapport à l'axe géométrique du second plot radio-opaque (19).

10. Procédé selon l'une des revendications 5 à 9, **caractérisé en ce que** la réplique comporte un évidement débouchant d'une part dans la face de la réplique destinée à être tournée vers la langue du patient, dite face linguale, ou dans la face de la réplique destinée à être tournée vers la joue du patient, dite face vestibulaire, et d'autre part dans le logement ménagé dans la réplique, l'évidement s'étendant sur au moins une partie de la hauteur de la réplique, et de préférence sur la totalité de la hauteur de la réplique.

11. Procédé selon l'une des revendications 5 à 10, **caractérisé en ce que** la réplique (2) est montée dans la gouttière (5) lors de l'étape de réalisation de cette dernière.
